# EUROPÄISCHE PATENTANMELDUNG

(11) **EP 4 361 505 A1**
(43) Veröffentlichungstag der Anmeldung: **01.05.2024**
(21) Anmeldenummer: 22204356.4
(22) Anmeldetag: 28.10.2022
(51) Int. Cl.: F24D 3/00, F24D 3/18, F24S 20/66

(54) **GEBÄUDE MIT HEIZSYSTEM**

(71) Anmelder: Ritter, Jon, 7000 Chur (CH); Wallner, Bernhard, 2833 Bromberg (AT)
(72) Erfinder: WALLNER, Bernhard, 2833 Bromberg (AT)

(57) **Zusammenfassung**

Die vorliegende Erfindung betrifft ein Gebäude (1) mit einer wärmegedämmten Gebäudehülle (2) und einem Heizsystem (7), das einen in die Gebäudehülle (2) integrierten oder an dieser außen anliegenden Wärmekollektor (8), einen im Gebäude (1) angeordneten Wärmeemitter (9) und eine mit dem Wärmekollektor (8) und dem Wärmeemitter (9) verbundene Wärmepumpe (10) hat, die dazu ausgebildet ist, der Umgebung (11) des Gebäudes (1) über den Wärmekollektor (8) Wärme (W_{U}) zu entziehen und dem Wärmeemitter (9) zuzuführen, wobei die Gebäudehülle (2) an jener Stelle (12), an welcher der Wärmekollektor (8) integriert ist oder anliegt, schwächer wärmegedämmt ist als in einem diese Stelle (12) umgebenden Bereich (13).

## Beschreibung

Die vorliegende Erfindung betrifft ein Gebäude mit einer wärmegedämmten Gebäudehülle und einem Heizsystem, das einen in die Gebäudehülle integrierten oder an dieser außen anliegenden Wärmekollektor, einen im Gebäude angeordneten Wärmeemitter und eine mit dem Wärmekollektor und dem Wärmeemitter verbundene Wärmepumpe hat, die dazu ausgebildet ist, der Umgebung des Gebäudes über den Wärmekollektor Wärme zu entziehen und dem Wärmeemitter zuzuführen.

Gebäude mit einem außen an der Gebäudefassade oder am Dach anliegenden Wärmekollektor sind beispielsweise aus den Schriften CH 708 493 A2 oder DE 44 23 137 A1 bekannt und können mit der über den Wärmekollektor der Umgebung entzogenen und über den Wärmeemitter ins Gebäudeinnere eingebrachten Umgebungswärme energieeffizient und klimafreundlich beheizt werden. Um einen unerwünschten Wärmestrom nach außen so gut wie möglich zu unterbinden, werden solche Gebäude möglichst stark und um Wärmebrücken zu vermeiden, möglichst gleichmäßig wärmegedämmt, insbesondere im Dachbereich, da die Wärme im Gebäudeinneren dorthin aufsteigt, was hohen Dämmmaterialeinsatz und hohe Kosten verursacht.

Die Erfindung setzt sich zum Ziel, ein Gebäude mit einem Heizsystem zu schaffen, welches besonders energie-, material- und kosteneffizient ist.

Dieses Ziel wird mit einem Gebäude der einleitend genannten Art erreicht, das sich gemäß der Erfindung dadurch auszeichnet, dass die Gebäudehülle an jener Stelle, an welcher der Wärmekollektor integriert ist oder anliegt, schwächer wärmegedämmt ist als in einem diese Stelle umgebenden Bereich.

Der Erfindung liegt das Prinzip zugrunde, an der genannten Stelle bewusst eine Wärmebrücke zum Wärmekollektor hin vorzusehen, um den Wärmestrom im Gebäude gezielt in Richtung des Wärmekollektors zu leiten und von dort über die Wärmepumpe und den Wärmeemitter wieder dem Gebäudeinneren zuzuführen. Der Wärmekollektor wird von der Wärmepumpe gekühlt und erzeugt dadurch gleichsam einen "Wärmemagnet", wodurch die Wärme überwiegend an der genannten Stelle austritt, wo sie zurückgewonnen werden kann. Dadurch wird einerseits dem Wärmekollektor mehr Wärme zugeführt und in das Gebäude rückgeführt und andererseits der Wärmestrom aus dem Gebäudeinneren auf die genannte Stelle gerichtet, wodurch weniger Wärme über den besser wärmegedämmten Bereich der Gebäudehülle ungenützt verloren geht. Da an der genannten Stelle die Wärmedämmung geringer ist als im umliegenden Bereich können Dämmmaterial und Kosten gespart werden. Im Ergebnis ist das erfindungsgemäße Gebäude damit besonders energie-, material- und kosteneffizient.

In einer bevorzugten Ausführungsform ist der Wärmekollektor außerhalb einer wasserdichten Schicht der Gebäudehülle angeordnet. Folglich kann die Wärmepumpe den Wärmekollektor abkühlen, ohne dass allenfalls am Wärmekollektor kondensierende Flüssigkeit in das Gebäude eindringen kann. Dies ermöglicht es, den Wärmekollektor bei Bedarf auch mit einer größeren Temperaturdifferenz zur Umgebung zu betreiben und dieser so besonders viel Wärme zu entziehen und über den Wärmeemitter dem Gebäude zuzuführen.

Um die Wirkung des Wärmekollektors zu steigern, ist es günstig, wenn der Wärmekollektor höher als der Wärmeemitter im Gebäude angeordnet ist. Dadurch strömt die vom Wärmeemitter eingebrachte Wärme sowohl infolge eines Temperaturunterschieds zwischen Gebäudeinnerem und Wärmekollektor als auch infolge des Auftriebs der tiefer unten erwärmten Luft zum höher gelegenen Wärmekollektor.

Im Allgemeinen hat die Gebäudehülle Fenster und/oder Türen. Vorteilhaft ist, wenn der Wärmekollektor gegenüber diesen höher angeordnet ist und der genannte umgebende Bereich sich von oben bis zu den Fenstern bzw. Türen erstreckt. So wird die Wirkung des Heizsystems auch für Gebäude nutzbar gemacht, deren Fenster bzw. Türen eine schwächere Wärmedämmung als die restliche Gebäudehülle aufweisen bzw. öfter geöffnet werden, insbesondere bei großen Innenräumen, z.B. für Lagerhallen mit hohem Warenumschlag, Sport- oder Veranstaltungshallen.

In einer Ausführungsform ist der Wärmekollektor an einer Außenwand angeordnet, z.B. daran anliegend oder in diese integriert. In einer vorteilhaften alternativen oder ergänzenden Ausführungsform ist der Wärmekollektor am Dach des Gebäudes angeordnet. Dabei kann die Fläche des Wärmekollektors besonders groß sein. In einer kompakt in die Gebäudehülle integrierbaren Variante dieser Ausführungsform ist der Wärmekollektor zwischen den Dachlatten und/oder der Konterlattung des Dachs angeordnet.

Der Wärmeemitter kann z.B. eine in eine oder mehrere Wände des Gebäudes integrierte Wandheizung sein und/oder einen oder mehrere Radiatoren umfassen. Um auf effiziente Weise eine behagliche Temperatur zu erzielen, ist bevorzugt der Wärmeemitter in einen Fußboden des Gebäudes integriert, d.h. eine Fußbodenheizung.

In einer vorteilhaften Ausführungsform hat das Heizsystem an der genannten Stelle einen an der Gebäudehülle innen anliegenden zusätzlichen Wärmekollektor, wobei die Wärmepumpe ferner dazu ausgebildet ist, über den zusätzlichen Wärmekollektor dem Gebäude Wärme zu entziehen. Dabei liegen der Wärmekollektor und der zusätzliche Wärmekollektor einander gegenüber und letzterer fungiert als zusätzlicher innerer "Wärmemagnet".

Das Gebäude kann ein- oder mehrgeschoßig sein. In einer vorteilhaften Ausführungsform hat das Gebäude zumindest eine Zwischendecke mit einer unteren und einer oberen Schicht und das Heizsystem einen weiteren Wärmekollektor in der unteren Schicht und einen weiteren Wärmeemitter in der oberen Schicht, wobei die Wärmepumpe ferner dazu ausgebildet ist, über den weiteren Wärmekollektor dem Gebäude Wärme zu entziehen und entzogene Wärme dem weiteren Wärmeemitter zuzuführen. Der weitere Wärmekollektor dient darin als zusätzlicher "Wärmemagnet" des darunterliegenden Geschoßes und der weitere Wärmeemitter als zusätzliche Heizung des darüberliegenden Geschoßes. Nach diesem Prinzip kann die Wärmepumpe die entzogene Wärme auch über mehrere Geschoße effizient verteilen bzw. zwischen diesen umschichten.

Der Wärmekollektor kann ein beliebiger aus dem Stand der Technik bekannter Kollektor sein und z.B. ein Kapillarsystem umfassen. In einer bevorzugten Ausführungsform umfasst der Wärmekollektor ein fluidführendes Tichelmann-Flächenrohrsystem mit einer Vorlaufleitung und einer davon beabstandeten Rücklaufleitung, die durch eine Vielzahl paralleler Zwischenrohre miteinander verbunden sind, welche die Kollektorfläche bilden. Ein Tichelmann-Flächenrohrsystem setzt dem durchströmenden Fluid bei gleichmäßiger Fluidverteilung einen vergleichsweise geringen Strömungswiderstand entgegen und erleichtert damit einen gleichmäßigen und effizienten Durchfluss des Fluides, wodurch der Wärmekollektor auch gleichmäßig und effizient Wärme aus der Umgebung aufnehmen kann.

In ähnlicher Weise kann der Wärmeemitter ein fluidführendes Tichelmann-Flächenrohrsystem mit einer Vorlaufleitung und einer davon beabstandeten Rücklaufleitung umfassen, die durch eine Vielzahl paralleler Zwischenrohre miteinander verbunden sind, welche die Emitterfläche bilden.

In einem vorteilhaften Tichelmann-Flächenrohrsystem haben die Vor- und Rücklaufleitungen einen Rohrdurchmesser im Bereich von 10 bis 30 mm, bevorzugt im Bereich von 12 bis 20 mm, und die Zwischenrohre jeweils einen kleineren Rohrdurchmesser im Bereich von 6 bis 20 mm, bevorzugt im Bereich von 8 bis 12 mm, wodurch eine hohe Durchflussmenge des Fluids erzielt werden kann, sodass auch bei geringer Temperaturdifferenz zwischen Wärmekollektor und Umgebung eine große Wärmemenge aufgenommen wird.

Zu diesem Zweck ist ferner es günstig, wenn die Wärmepumpe für einen Durchsatz von zumindest 15 Kilogramm, bevorzugt zumindest 30 Kilogramm Fluid pro Stunde und Quadratmeter des Flächenrohrsystems ausgebildet ist.

Die Erfindung wird nachstehend anhand von in den beigeschlossenen Zeichnungen dargestellten Ausführungsbeispielen näher erläutert. In den Zeichnungen zeigt:
Fig. 1 ein erfindungsgemäßes Gebäude mit einem Flachdach und einem Heizsystem, dessen Wärmekollektor in das Flachdach integriert ist, in einem vertikalen Querschnitt;
Fig. 2 eine Variante des erfindungsgemäßen Gebäudes von Fig. 1 in einem vertikalen Querschnitt;
Fig. 3 ein mehrgeschoßiges Gebäude gemäß der Erfindung mit einem Satteldach und einem Heizsystem, dessen Wärmekollektoren in das Satteldach und die Zwischendecke integriert sind, in einem vertikalen Querschnitt; und
Fig. 4 ein den Wärmekollektor umfassendes Detail des Heizsystems von Fig. 3 in einer Perspektivansicht von schräg oben.

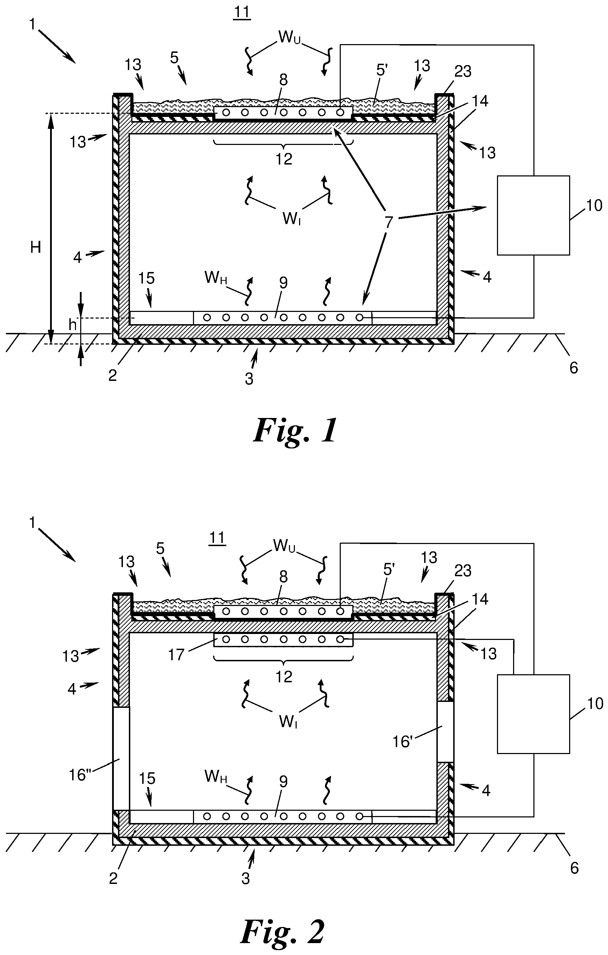

Die Fig. 1 und 2 zeigen ein Gebäude 1 mit einer wärmegedämmten Gebäudehülle 2, welche durch eine Bodenplatte bzw. ein Fundament 3, mehrere Außenwände 4 und ein Dach 5 (hier: ein optional begehbares Flachdach) gebildet ist. Das Gebäude 1 kann am oder - z.B. auf Pfählen - über dem Boden 6 aufgestellt oder in diesen zumindest teilweise versenkt sein.

Das Gebäude 1 hat ferner ein Heizsystem 7 mit einem Wärmekollektor 8, welcher in die Gebäudehülle 2 integriert ist (hier: in eine Kiesschicht 5' am Flachdach 5) oder an dieser außen anliegt, einen Wärmeemitter 9, welcher im Gebäude 1 angeordnet ist, und eine Wärmepumpe 10, welche mit dem Wärmekollektor 8 und dem Wärmeemitter 9 mittelbar - z.B. mithilfe eines oder mehrerer Wärmetauscher (nicht gezeigt) - oder unmittelbar verbunden ist. Die Wärmepumpe 10 entzieht der Umgebung 11 über den Wärmekollektor 8 Wärme W_{U} und führt die entzogene Wärme dem Wärmeemitter 9 zu. Der Wärmeemitter 9 gibt die zugeführte Wärme als Heizwärme W_{H} an das Gebäude 1 ab.

Die Wärmepumpe 10 hat einerseits die Aufgabe, ein Fluid auf ein unterhalb der Umgebungstemperatur liegendes Temperaturniveau zu senken und durch den Wärmekollektor 8 zu fördern, sodass dieser der Umgebung 11 die Umgebungswärme W_{U} entzieht, und andererseits, das dadurch erwärmte Fluid auf ein höheres Temperaturniveau zu heben und durch den Wärmeemitter 9 zu fördern, sodass dieser dem Gebäude 1 die Heizwärme W_{H} zuführt. Dazu ist die Wärmepumpe 10 insbesondere eine Kompressions-, Adsorptions- oder Absorptionswärmepumpe und hat z.B. eine/n oder mehrere Pumpe/n, Verdichter, Drossel/n und/oder Wärmetauscher, eine Steuereinheit, damit verbundene Temperaturfühler, usw.

Neben der Umgebungswärme W_{U} nimmt der in die Gebäudehülle 2 integrierte bzw. daran anliegende Wärmekollektor 8 auch Wärme W_{I} aus dem Inneren des Gebäudes 1 auf. Hiezu ist die Gebäudehülle 2 an jener Stelle 12, an welcher der Wärmekollektor 8 in die Gebäudehülle 2 integriert ist oder an dieser anliegt, schwächer wärmegedämmt als in einem Bereich 13, der diese Stelle 12 umgibt. Die gegenüber ihrem umgebenden Bereich 13 geringere Wärmedämmung an dieser Stelle 12 kann auf vielerlei Weise erreicht werden, z.B. durch schwächer wärmedämmendes, dünneres oder überhaupt fehlendes Wand-, Decken- und/oder Dämmmaterial an der Stelle 12. In den dargestellten Ausführungsformen ist über die gesamte Gebäudehülle 2 mit Ausnahme der Stelle 12 eine Isolierschicht 14 angebracht; der genannte umgebende Bereich 13 überdeckt somit den gesamten Rest der Gebäudehülle 2. Alternativ dazu kann der umgebende Bereich 13 kleiner sein, z.B. nur den Rest des Dachs 5 und optional zumindest einen das Dach 5 umgebenden Teil der Außenwände 4 überdecken.

Da beim Heizen das Temperaturniveau des Wärmekollektors 8 unter jenem der Umgebung 11 und jenem des Gebäudes 1 liegt, strömt die Wärme W_{I} im Gebäudeinneren bevorzugt zum kühleren Wärmekollektor 8, sodass dieser gleichsam als "Wärmemagnet" wirkt. Infolgedessen wird ein wesentlicher Anteil der nach außen strömenden Wärme W_{I} über den Wärmekollektor 8 von der Wärmepumpe 10 rückgeführt und entweicht weniger Wärme W_{I} über den besser gedämmten Bereich 13.

Um den Anteil der rückgeführten Wärme weiter zu steigern, ist der Wärmekollektor 8 optional höher, d.h. in größerer Höhe H, als der Wärmeemitter 9 im Gebäude 1 angeordnet, z.B. der Wärmekollektor 8 am oder im Dach 5 oder oberhalb des Wärmeemitters 9 an zumindest einer Außenwand 4 und der Wärmeemitter 9 am oder im Fußboden 15 oder unterhalb des Wärmekollektors 8, d.h. auf geringerer Höhe h, an zumindest einer Außen- oder Innenwand. Alternativ ist der Wärmekollektor 8 auf gleicher Höhe oder tiefer als der Wärmeemitter 9 angeordnet.

Der Querschnitt des Gebäudes 1 der Fig. 2 zeigt in der Gebäudehülle 2 auch Fenster 16' und Türen 16". Optional ist der Wärmekollektor 8 höher als die Fenster 16' und Türen 16" angeordnet und der stärker wärmegedämmte Bereich 13 erstreckt sich zumindest bis zu den Fenstern 16' und Türen 16" - im dargestellten Beispiel noch weiter hinunter. Anders als in der dargestellten Variante kann also die Gebäudehülle 2 unter den Fenstern 16' und Türen 16" schwächer wärmegedämmt sein, z.B. wenn in der Nähe der Fenster 16' und Türen 16" oder in Bodennähe eine niedrige Temperatur akzeptabel oder sogar erwünscht ist, oder Fenster 16' bzw. Türen 16" häufig geöffnet werden, z.B. in einer Lager-, Sport- oder Veranstaltungshalle.

In der in Fig. 2 gezeigten optionalen Variante hat das Heizsystem 7 an der genannten Stelle 12 einen an der Gebäudehülle 2 innen anliegenden zusätzlichen Wärmekollektor 17, d.h. einen die genannte Stelle 12 von unten - optional vollflächig - abdeckenden Wärmekollektor 17, der vom außen anliegenden oder integrierten Wärmekollektor 8 durch zumindest einen Teil der Gebäudehülle 2 getrennt ist. Der zusätzliche Wärmekollektor 17 ist ebenfalls mit der Wärmepumpe 10 verbunden, welche dem Gebäude 1 darüber Wärme W_{I} entzieht, und wirkt so als zusätzlicher "Wärmemagnet" innerhalb des Gebäudes 1.

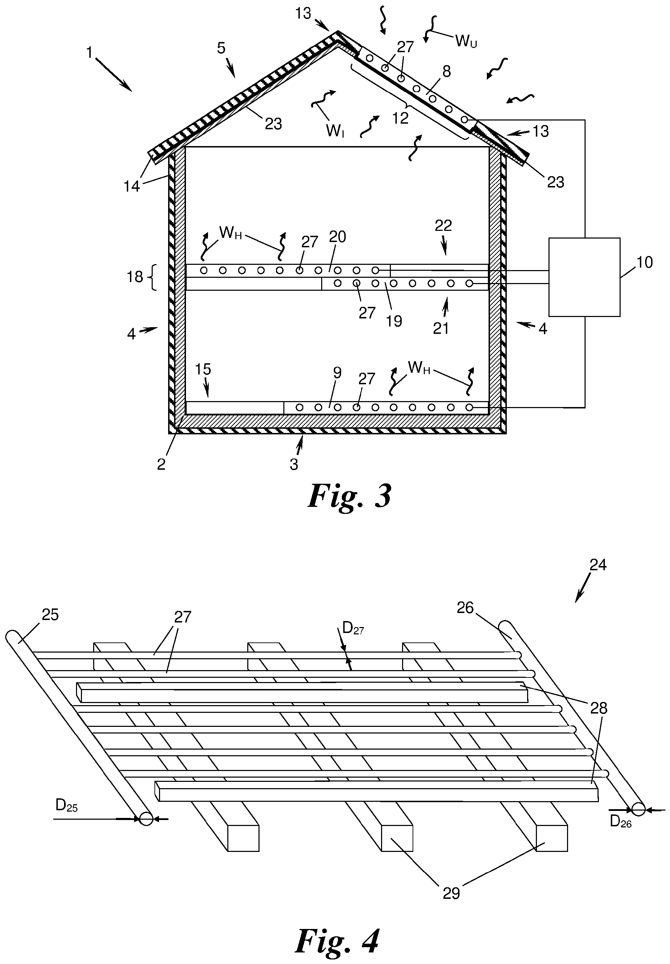

Das Gebäude 1 der Ausführungsform der Fig. 3 ist zweigeschoßig und hat eine innerhalb der Gebäudehülle 2 angeordnete Zwischendecke 18 und ferner ein optionales Satteldach 5. Der vorgenannte Wärmekollektor 8 ist optional oberhalb der Zwischendecke 18 (hier: im Satteldach 5) und der vorgenannte Wärmeemitter 9 unterhalb der Zwischendecke 18 (hier: im Fußboden 15 des Erdgeschoßes) angeordnet. Im gezeigten Beispiel weist das Heizsystem 7 einen weiteren Wärmekollektor 19 und einen weiteren Wärmeemitter 20 auf, welche beide - mittelbar oder unmittelbar - mit der Wärmepumpe 10 verbunden sind. Der weitere Wärmekollektor 19 ist in einer unteren Schicht 21 der Zwischendecke 18 angeordnet und der weitere Wärmeemitter 20 in einer oberen Schicht 22 der Zwischendicke 18; zwischen den Schichten 21, 22 könnte zusätzlich eine Dämmschicht verlaufen.

Die Wärmepumpe 10 entzieht dem Gebäude 1 über den weiteren Wärmekollektor 19 zumindest ein wenig Wärme und führt dem weiteren Wärmeemitter 20 entzogene Wärme zu. In mehrgeschoßigen Gebäuden 1 ist optional jede Zwischendecke 18 mit derartigen weiteren Wärmekollektoren und -emittern 19, 20 ausgestattet.

Die Wärmekollektoren und -emitter 8, 9, 17, 19, 20 können auf verschiedene Arten über die Wärmepumpe 10 miteinander verbunden sein. Beispielsweise bilden sie zusammen mit den Komponenten der Wärmepumpe 10 einen oder mehrere Kreisläufe. Dadurch kann die Wärmepumpe 10 die Wärmekollektoren und -emitter 8, 9, 17, 19, 20 auf unterschiedliche Temperaturniveaus bringen, z.B. den genannten Wärmekollektor 8 auf eine unter der Umgebungstemperatur liegende Temperatur im Bereich zwischen -20°C und 25°C, den zusätzlichen Wärmekollektor 17 und den weiteren Wärmekollektor 19 jeweils auf eine unter der Temperatur innerhalb des Gebäudes 1 liegende Temperatur im Bereich zwischen 18° und 24° und den genannten Wärmeemitter 9 und den weiteren Wärmeemitter 20 jeweils auf eine Temperatur im Bereich zwischen 22°C und 42°C. Zu diesem Zweck ist die Wärmepumpe 10 z.B. auf Basis der Umgebungstemperatur, der Gebäudeinnentemperatur bzw. Geschoßtemperaturen und/oder etwaiger Fluid-Vorlauf- und Rücklauftemperaturen steuerbar und optional mehrstufig aufgebaut.

Wie in den Fig. 1 bis 3 dargestellt ist der Wärmekollektor 8 optional außerhalb einer wasserabweisenden Schicht 23, z.B. einer wasserabweisenden Folie - insbesondere Dachpappe - oder Beschichtung, angeordnet. Dadurch verbleibt beim Betreiben des Wärmekollektors 8 sich niederschlagendes Kondenswasser außerhalb des Gebäudes 1 und eine Beschädigung der Bausubstanz wird vermieden.

Es versteht sich, dass die Wärmekollektoren und -emitter 8, 9, 17, 19, 20 durch verschiedene Varianten von Wärmeaufnahme- bzw. -abgabesystemen gebildet sein können, insbesondere durch fluidführende, z.B. wasserführende, optional spiralförmige (Kapillar-)Rohr- und/oder Flächensysteme.

Fig. 4 zeigt eine mögliche Ausführungsform des Wärmekollektors 8 als fluidführendes Tichelmann-Flächenrohrsystem 24. Dieses hat eine von der Wärmepumpe 10 gespeiste Vorlaufleitung 25 und eine davon beabstandete Rücklaufleitung 26 zur Wärmepumpe 10, welche durch eine bedarfsabhängige Vielzahl zueinander paralleler Zwischenrohre 27 miteinander verbunden sind. Die Zwischenrohre 27 bilden die Kollektorfläche, über welche die Wärme W_{U}, W_{I} aufgenommen wird. Die Rohrdurchmesser D₂₅, D₂₆ der Vor- und Rücklaufleitungen 25, 26 können je nach Gebäudegröße bzw. Kollektorfläche beispielsweise jeweils im Bereich von 10 mm bis 30 mm liegen, insbesondere im Bereich von 12 mm bis 20 mm; die kleineren Rohrdurchmesser D₂₇ der Zwischenrohre 27 liegen dabei z.B. jeweils im Bereich von 6 mm bis 20 mm, insbesondere im Bereich von 8 mm bis 12 mm.

Während im Beispiel der Fig. 4 die Rohre 25, 26, 27 des Wärmekollektors 8 zwischen den Dachlatten 28 des Daches 5 verlegt sind, könnten diese alternativ zwischen der Konterlattung 29 oder an anderer Stelle im Dach 5 - oder überhaupt an einer anderen Stelle der Gebäudehülle 3 verlegt sein.

Selbstverständlich kann jeder der genannten Wärmekollektoren und -emitter 8, 9, 17, 19, 20 durch ein solches Tichelmann-Flächenrohrsystem 24 gebildet sein.

Die Wärmepumpe 10 ist optional für einen Durchsatz von z.B. mehr als 15 oder mehr als 30 Kilogramm Fluid pro Stunde und Quadratmeter des Flächenrohrsystems 24 ausgebildet, könnte je nach Bedarf und verwendeten Wärmekollektor- bzw. -emittersystemen jedoch auf geringeren oder höheren Fluiddurchsatz ausgelegt sein.

Optional ist das Heizsystem 7 auch zum Kühlen des Gebäudes 1 verwendbar, z.B. indem der beschriebene Prozess der Wärmepumpe 10 umgekehrt und dem Gebäude 1 entzogene Wärme an die Umgebung 11 abgeführt wird.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Gebäude mit einer wärmegedämmten Gebäudehülle (2) und einem Heizsystem (7), das einen in die Gebäudehülle (2) integrierten oder an dieser außen anliegenden Wärmekollektor (8), einen im Gebäude (1) angeordneten Wärmeemitter (9) und eine mit dem Wärmekollektor (8) und dem Wärmeemitter (9) verbundene Wärmepumpe (10) hat, die dazu ausgebildet ist, der Umgebung (11) des Gebäudes (1) über den Wärmekollektor (8) Wärme (W_{U}) zu entziehen und dem Wärmeemitter (9) zuzuführen,
**dadurch gekennzeichnet, dass** die Gebäudehülle (2) an jener Stelle (12), an welcher der Wärmekollektor (8) integriert ist oder anliegt, schwächer wärmegedämmt ist als in einem diese Stelle (12) umgebenden Bereich (13).

2. Gebäude nach Anspruch 1, **dadurch gekennzeichnet, dass** der Wärmekollektor (8) außerhalb einer wasserdichten Schicht (23) der Gebäudehülle (2) angeordnet ist.

3. Gebäude nach Anspruch 1 oder 2, **dadurch gekennzeichnet, dass** der Wärmekollektor (8) höher als der Wärmeemitter (9) angeordnet ist.

4. Gebäude nach einem der Ansprüche 1 bis 3, **dadurch gekennzeichnet, dass** die Gebäudehülle (2) Fenster (16') und/oder Türen (16") hat, gegenüber welchen der Wärmekollektor (8) höher angeordnet ist, und bis zu welchen sich der umgebende Bereich (13) erstreckt.

5. Gebäude nach Anspruch 3 oder 4, **dadurch gekennzeichnet, dass** der Wärmekollektor (8) am Dach (5) des Gebäudes (2) angeordnet ist.

6. Gebäude nach Anspruch 5, **dadurch gekennzeichnet, dass** der Wärmekollektor (8) zwischen den Dachlatten (28) und/oder der Konterlattung (29 des Dachs (5) angeordnet ist.

7. Gebäude nach einem der Ansprüche 1 bis 6, **dadurch gekennzeichnet, dass** der Wärmeemitter (9) in einen Fußboden (15) des Gebäudes (1) integriert ist.

8. Gebäude nach einem der Ansprüche 1 bis 7, **dadurch gekennzeichnet, dass** das Heizsystem (7) an der genannten Stelle (12) einen an der Gebäudehülle (2) innen anliegenden zusätzlichen Wärmekollektor (17) hat, wobei die Wärmepumpe (10) ferner dazu ausgebildet ist, über den zusätzlichen Wärmekollektor (17) dem Gebäude (1) Wärme (W_{I}) zu entziehen.

9. Gebäude nach den Ansprüchen 1 bis 8, **dadurch gekennzeichnet, dass** das Gebäude (1) zumindest eine Zwischendecke (18) mit einer unteren und einer oberen Schicht (21, 22) und das Heizsystem (7) einen weiteren Wärmekollektor (19) in der unteren Schicht (21) und einen weiteren Wärmeemitter (20) in der oberen Schicht (22) hat, wobei die Wärmepumpe (10) ferner dazu ausgebildet ist, über den weiteren Wärmekollektor (19) dem Gebäude (1) Wärme (W_{I}) zu entziehen und entzogene Wärme dem weiteren Wärmeemitter (20) zuzuführen.

10. Gebäude nach einem der Ansprüche 1 bis 9, **dadurch gekennzeichnet, dass** der Wärmekollektor (8) ein fluidführendes Tichelmann-Flächenrohrsystem (24) mit einer Vorlaufleitung (25) und einer davon beabstandeten Rücklaufleitung (26) umfasst, die durch eine Vielzahl paralleler Zwischenrohre (27) miteinander verbunden sind, welche die Kollektorfläche bilden.

11. Gebäude nach einem der Ansprüche 1 bis 10, **dadurch gekennzeichnet, dass** der Wärmeemitter (9) ein fluidführendes Tichelmann-Flächenrohrsystem (24) mit einer Vorlaufleitung (25) und einer davon beabstandeten Rücklaufleitung (26) umfasst, die durch eine Vielzahl paralleler Zwischenrohre (27) miteinander verbunden sind, welche die Emitterfläche bilden.

12. Gebäude nach Anspruch 10 oder 11, **dadurch gekennzeichnet, dass** die Vor- und Rücklaufleitungen (25, 26) einen Rohrdurchmesser (D₂₅, D₂₆) im Bereich von 10 bis 30 mm haben, bevorzugt im Bereich von 12 bis 20 mm, und die Zwischenrohre (27) jeweils einen kleineren Rohrdurchmesser (D₂₇) im Bereich von 6 bis 20 mm haben, bevorzugt im Bereich von 8 bis 12 mm.

13. Gebäude nach einem der Ansprüche 10 bis 12, **dadurch gekennzeichnet, dass** die Wärmepumpe (10) für einen Durchsatz von zumindest 15 Kilogramm, bevorzugt zumindest 30 Kilogramm Fluid pro Stunde und Quadratmeter des Flächenrohrsystems (24) ausgebildet ist.
